(19) Europäisches Patentamt
European Patent Office
Office européen des brevets

(11) **EP 4 353 778 A1**

(12) **EUROPEAN PATENT APPLICATION**
published in accordance with Art. 153(4) EPC

(43) Date of publication:
**17.04.2024 Bulletin 2024/16**

(21) Application number: **22816003.2**

(22) Date of filing: **27.05.2022**

(51) International Patent Classification (IPC):
*C08L 27/16* (2006.01)     *C08F 212/06* (2006.01)
*C08F 220/14* (2006.01)     *C08F 222/06* (2006.01)
*C08J 5/18* (2006.01)       *C08L 25/04* (2006.01)
*C08L 33/12* (2006.01)

(52) Cooperative Patent Classification (CPC):
**C08F 212/06; C08F 220/14; C08F 222/06;
C08J 5/18; C08L 25/04; C08L 27/16; C08L 33/12**

(86) International application number:
**PCT/JP2022/021760**

(87) International publication number:
**WO 2022/255253 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.06.2021 JP 2021093731**

(71) Applicant: **Kuraray Co., Ltd.**
**Kurashiki-shi, Okayama 710-0801 (JP)**

(72) Inventors:
• **NOMOTO, Yusaku**
  **Tainai-shi, Niigata 959-2691 (JP)**
• **ASAMI, Rina**
  **Tokyo 100-0004 (JP)**
• **NAGASAKI, Tatsuya**
  **Tainai-shi, Niigata 959-2691 (JP)**

(74) Representative: **Müller-Boré & Partner
Patentanwälte PartG mbB
Friedenheimer Brücke 21
80639 München (DE)**

(54) **VINYLIDENE FLUORIDE-BASED RESIN COMPOSITION, MOLDED ARTICLE, AND MULTILAYER BODY**

(57)     The problem to be solved by the present invention is to provide a vinylidene fluoride-based resin composition, a molded article, and a laminate, all of which have excellent heat resistance, wear resistance, and solvent resistance. The present invention provides a vinylidene fluoride-based resin composition that is a resin composition comprising 60 to 95 mass% of a vinylidene fluoride-based resin (A) and 5 to 40 mass% of a methacrylic copolymer (B), the methacrylic copolymer (B) comprising 50 to 93 mass% of a methyl methacrylate unit, 7 to 30 mass% of an $\alpha$-methylstyrene unit, and 0 to 20 mass% of another monomer unit copolymerizable with these units.

**EP 4 353 778 A1**

**Description**

Technical Field

This application claims priority to Japanese Patent Application No. 2021-093731 filed on June 3, 2021 (the disclosure of which is incorporated herein by reference). The present invention relates to a vinylidene fluoride-based resin composition, a molded article, and a laminate.

Background Art

Fluororesins have excellent properties, such as weather resistance, flame retardancy, heat resistance, stain resistance, smoothness, and chemical resistance, and are suitable as materials for articles exposed to outdoor environments. Among fluororesins, vinylidene fluoride-based resins, particularly polyvinylidene fluoride (hereinafter referred to as "PVDF"), are thermoplastic resins that have a large difference between the melting point and the decomposition temperature and are suitable for molding. However, PVDF crystals tend to grow to a size larger than the wavelength of visible light and scatter part of the visible light, resulting in low transparency. Therefore, films made of PVDF crystallize during film formation, resulting in high haze and opacity.

As a technique to reduce the haze of films made of PVDF, there is a technique to mix PVDF with methacrylic resins to reduce the crystallinity of PVDF (see, for example, PTL 1 to PTL 3) .

However, methacrylic resins have inferior heat resistance, wear resistance, and solvent resistance compared to PVDF. Further, resin compositions of PVDF and methacrylic resins tend to easily form $\beta$-type crystal seeds and are less likely to form an $\alpha$-type crystal structure with high heat resistance. For this reason, films of resin compositions containing PVDF and methacrylic resins may have insufficient heat resistance, wear resistance, and solvent resistance.

Citation List

Patent Literature

    PTL 1: JPS43-12012A
    PTL 2: JP2002-19051A
    PTL 3: WO2016/199829A1

Summary of Invention

Technical Problem

In view of the above circumstances, an object of the present invention is to provide a vinylidene fluoride-based resin composition, a molded article, and a laminate, all of which have excellent heat resistance, wear resistance, and solvent resistance.

Solution to Problem

As a result of studies to achieve the above object, the present invention, which includes the following aspects, has been completed.

    [1] A vinylidene fluoride-based resin composition that is a resin composition comprising 60 to 95 mass% of a vinylidene fluoride-based resin (A) and 5 to 40 mass% of a methacrylic copolymer (B),
    the methacrylic copolymer (B) comprising 50 to 93 mass% of a methyl methacrylate unit, 7 to 30 mass% of an $\alpha$-methylstyrene unit, and 0 to 20 mass% of another monomer unit copolymerizable with these units.
    [2] The vinylidene fluoride-based resin composition according to [1], wherein the other copolymerizable monomer unit is formed from at least one member selected from the group consisting of an unsaturated dicarboxylic anhydride monomer, an acrylic acid ester monomer, an aromatic vinyl monomer, and a vinyl cyanide monomer.
    [3] The vinylidene fluoride-based resin composition according to [1] or [2], wherein the other copolymerizable monomer unit is formed from at least one member selected from the group consisting of maleic anhydride, methyl acrylate, ethyl acrylate, styrene, and acrylonitrile.
    [4] The vinylidene fluoride-based resin composition according to any one of [1] to [3], wherein the vinylidene fluoride-based resin (A) is a homopolymer of vinylidene fluoride.

[5] The vinylidene fluoride-based resin composition according to any one of [1] to [4], wherein a crystal structure determined from infrared absorption spectrum absorbance has a proportion of α-type crystals of 40% or more when the sum of α-type crystals and β-type crystals is taken as 100%.

[6] The vinylidene fluoride-based resin composition according to any one of [1] to [5], which has a crystal melting enthalpy of 15 J/g or more and 40 J/g or less as measured by a differential scanning calorimeter.

[7] A molded article molded from the vinylidene fluoride-based resin composition according to any one of [1] to [6].

[8] The molded article according to [7], which is a film having a thickness of 350 um or less.

[9] A laminate having a layer comprising the vinylidene fluoride-based resin composition according to any one of [1] to [6] and a layer comprising another thermoplastic resin.

Advantageous Effects of Invention

According to the present invention, a film and a laminate each having excellent heat resistance, wear resistance, and solvent resistance can be obtained by using a resin composition containing a vinylidene fluoride-based resin and a methacrylic copolymer.

Description of Embodiments

The vinylidene fluoride-based resin composition of the present invention comprises a vinylidene fluoride-based resin (A) and a methacrylic copolymer (B). The content of the vinylidene fluoride-based resin (A) in the vinylidene fluoride-based resin composition is 60 to 95 mass%, preferably 65 to 90 mass%, and more preferably in the range of 70 to 85 mass%. The vinylidene fluoride-based resin composition of the present invention has excellent heat resistance, wear resistance, and solvent resistance due to the content of the vinylidene fluoride-based resin (A) being 60 mass% or more, and has improved transparency due to the content of the vinylidene fluoride-based resin (A) being 95 mass% or less.

Vinylidene Fluoride-Based Resin (A)

In the present invention, the "vinylidene fluoride-based resin" refers to a polymer containing a vinylidene fluoride unit as a main component. The content of the vinylidene fluoride unit is 50 mass% or more, preferably 75 mass% or more, and more preferably 85 mass% or more, in 100 mass% of the polymer. A homopolymer with 100 mass% of the vinylidene fluoride unit (PVDF) may also be used.

The weight average molecular weight (hereinafter referred to as "Mw") of the vinylidene fluoride-based resin is preferably 50,000 to 350,000, more preferably 60,000 to 300,000, and even more preferably 70,000 to 250,000. Because the Mw is 50,000 or more, mechanical strength is ensured for films made of the vinylidene fluoride-based resin composition of the present invention. Further, because the Mw is 350,000 or less, melt viscosity suitable for molding processing is easily obtained.

The weight average molecular weight (Mw) is a value calculated by converting a chromatogram measured by gel permeation chromatography to the molecular weight of standard polystyrene.

The vinylidene fluoride-based resin of the present invention may contain a structural unit derived from a fluorine-containing monomer in addition to the structural unit derived from vinylidene fluoride. One or two or more structural units derived from the fluorine-containing monomer may be used.

Examples of the fluorine-containing monomer include hexafluoropropylene (HFP), trifluoroethylene, chlorotrifluoroethylene (CTFE), tetrafluoroethylene (TFE), perfluoroalkyl vinyl ether, and the like. Of these, hexafluoropropylene, chlorotrifluoroethylene, and tetrafluoroethylene are preferred in terms of transparency.

The content rate of the structural unit derived from the fluorine-containing monomer in the vinylidene fluoride-based resin is preferably 2 mass% or more, more preferably 4 mass% or more, and even more preferably 6 mass% or more, in terms of transparency.

The above content rate is also preferably 25 mass% or less, more preferably 20 mass% or less, and even more preferably 15 mass% or less, in terms of high crystallinity. The improvement of the crystallinity of the vinylidene fluoride-based resin leads to the improvement of the physical properties of films molded from the above resin composition.

To the extent that the effect of the present embodiment is obtained, the vinylidene fluoride-based resin may further contain structural units other than the structural unit derived from vinylidene fluoride and the structural unit derived from the fluorine-containing monomer. One or more such other structural units may be used. Examples include ethylene, unsaturated dibasic acid derivatives (e.g., monomethyl maleate and dimethyl maleate), and vinyl acetate.

Any polymerization method based on known polymerization methods, such as a suspension polymerization method and an emulsion polymerization method, may be used to synthesize the above vinylidene fluoride-based resin.

In the emulsion polymerization method, vinylidene fluoride alone, or vinylidene fluoride and a comonomer, such as hexafluoropropylene, are emulsified in an aqueous medium using a chemically stable fluorine-based emulsifier. Then, polymerization is carried out using an inorganic peroxide, an organic peroxide, an organic percarbonate compound, or the like as a polymerization initiator. After emulsion polymerization, fine latex in submicron units is precipitated and coagulated by a flocculant, and a vinylidene fluoride-based resin can be recovered as particles of appropriate size.

In the suspension polymerization method, vinylidene fluoride, or vinylidene fluoride and a comonomer are suspended in an aqueous medium using a suspending agent, such as methyl cellulose. For example, using an organic carbonate that is active at low temperature as a polymerization initiator, polymerization is initiated at a temperature equal to or below the critical temperature of vinylidene fluoride to produce primary polymer particles. If necessary, the temperature is raised to continue the polymerization reaction and produce secondary polymer particles.

The above vinylidene fluoride-based resins may be used singly or in a combination of two or more. As the vinylidene fluoride-based resin, it is preferable to use a vinylidene fluoride homopolymer (PVDF) alone because it is easy to crystallize.

Commercially available products may also be used as the vinylidene fluoride-based resin. Preferred usable examples include Kynar 720 (trade name) and Kynar 710 (trade name) produced by Arkema S.A., KF#850 (trade name) and KF#1100 (trade name) produced by Kureha Corporation, Solef 1006 (trade name) and Solef 1008 (trade name) produced by Solvay Specialty Polymers Japan K.K.), and the like.

Methacrylic Copolymer (B)

The content of the methacrylic copolymer (B) in the vinylidene fluoride-based resin composition of the present invention is 5 to 40 mass%, preferably 10 to 35 mass%, and even more preferably in the range of 15 to 30 mass%. The vinylidene fluoride-based resin composition of the present invention has excellent transparency because the content of the methacrylic copolymer (B) is within the range of 5 to 40 mass%.

The methacrylic copolymer (B) according to the present invention contains a methyl methacrylate unit and an α-methylstyrene unit. The methacrylic copolymer according to the present invention may further contain other monomer units copolymerizable with methyl methacrylate and/or α-methylstyrene.

In the methacrylic copolymer (B) according to the present invention, the proportion of the methyl methacrylate unit is 50 to 93 mass%, preferably 55 to 85 mass%, and more preferably 65 to 80 mass%, based on all structural units. In terms of increasing both the total light transmittance and heat resistance of the obtained methacrylic copolymer, it is preferable that the proportion of the methyl methacrylate unit is within this range.

In the methacrylic copolymer (B) according to the present invention, the proportion of the α-methylstyrene unit is 7 to 30 mass%, preferably 8 to 27 mass%, and more preferably 11 to 25 mass%, based on all structural units. In terms of increasing the heat resistance of the obtained methacrylic copolymer and increasing the polymerizability of the methacrylic copolymer to lead to high productivity, it is preferable that the proportion of the α-methylstyrene unit is within this range.

The methacrylic copolymer (B) according to the present invention may contain structural units other than the methyl methacrylate unit and the α-methylstyrene unit. Such structural units are other monomer units copolymerizable with the methyl methacrylate unit or/and the α-methylstyrene unit. Examples include unsaturated dicarboxylic acid anhydride monomer units, acrylic acid ester monomer units, aromatic vinyl monomer units, vinyl cyanide monomer units, and monomer units other than these monomer units. Monomer units copolymerizable with the methyl methacrylate unit or/and the α-methylstyrene unit may be used singly or in a combination of two or more.

In the methacrylic copolymer (B) according to the present invention, the proportion of other monomer units is 0 to 20 mass%, preferably 0 to 15 mass%, and more preferably 0 to 10 mass%, based on all structural units. In terms of increasing the heat resistance and rigidity of the obtained methacrylic copolymer, it is preferable that the proportion of structural units other than the methyl methacrylate unit and the α-methylstyrene unit is 20 mass% or less.

The unsaturated dicarboxylic acid anhydride, which serves as the raw material of the unsaturated dicarboxylic acid anhydride monomer unit, is not particularly limited. In terms of heat resistance, heat resistance stability, productivity, etc., preferred are maleic anhydride, itaconic anhydride, citraconic anhydride, and aconitic anhydride; and more preferred is maleic anhydride. One or two or more unsaturated dicarboxylic acid anhydride monomer units can be used.

The acrylic acid ester monomer, which serves as the raw material of the acrylic acid ester monomer unit, is not particularly limited. In terms of heat resistance, fluidity, heat resistance stability, productivity, etc., preferred are methyl acrylate, ethyl acrylate, n-propyl acrylate, n-butyl acrylate, sec-butyl acrylate, 2-ethylhexyl acrylate, benzyl acrylate, cyclohexyl acrylate, phenyl acrylate, and the like; more preferred are methyl acrylate, ethyl acrylate, and n-butyl acrylate; and even more preferred are methyl acrylate and ethyl acrylate, in terms of productivity. One or two or more acrylic acid ester monomer units can be used.

The aromatic vinyl monomer, which serves as the raw material of the aromatic vinyl monomer unit, is not particularly limited. In terms of heat resistance, fluidity, heat resistance stability, productivity, etc., preferred are styrene (St), o-methylstyrene, m-methylstyrene, p-methylstyrene, 2,4-dimethylstyrene, 2,5-dimethylstyrene, 3,4-dimethylstyrene, 3,5-dimethylstyrene, p-ethylstyrene, m-ethylstyrene, o-ethylstyrene, p-tert-butylstyrene, 1-vinylnaphthalene, 2-vinylnaphthalene, 1,1-diphenylethylene, isopropenyltoluene, isopropenylethylbenzene, isopropenylpropylbenzene, iso-propenylpropylbenzene, isopropenylbutylbenzene, isopropenylbenzylbenzene, isopropenylhexylbenzene, isopropeny-loctylbenzene, and the like; and more preferred is styrene in terms of productivity. One or two or more aromatic vinyl monomer units can be used.

The vinyl cyanide monomer, which serves as the raw material of the vinyl cyanide monomer unit, is not particularly limited. In terms of heat resistance, fluidity, heat resistance stability, productivity, etc., preferred are acrylonitrile (AN), methacrylonitrile, vinylidene cyanide, and the like; and particularly preferred is acrylonitrile in terms of easy availability and imparting chemical resistance. One or two or more vinyl cyanide monomer units can be used.

Monomer units other than the above are not particularly limited. Examples include amides, such as acrylamide and methacrylamide; ethylene glycols or oligomers thereof with both terminal hydroxyl groups esterified with acrylic acid or methacrylic acid, such as ethylene glycol di(meth)acrylate, diethylene glycol di(meth)acrylate, triethylene glycol di(meth)acrylate, and tetraethylene glycol di(meth)acrylate; hydroxyl groups of two alcohols esterified with acrylic acid or methacrylic acid, such as neopentyl glycol di(meth)acrylate and di(meth)acrylate; polyhydric alcohol derivatives esterified with acrylic acid or methacrylic acid, such as trimethylolpropane and pentaerythritol; polyfunctional monomers, such as divinylbenzene; and the like.

Among the monomers constituting the above other monomer units, at least one member selected from the group consisting of maleic anhydride, methyl acrylate (MA), ethyl acrylate, styrene, and acrylonitrile is preferred in terms of easy availability.

The weight average molecular weight (Mw) of the methacrylic copolymer (B) according to the present invention is preferably 30,000 to 200,000, more preferably 40,000 to 180,000, and even more preferably 50,000 to 160,000. When the Mw is 30,000 or more, the strength, toughness, etc. of the film and laminate of the present invention are improved. When the Mw is 200,000 or less, the fluidity of the methacrylic copolymer according to the present invention is improved, and molding processability is also improved.

The glass transition temperature of the methacrylic copolymer (B) according to the present invention is preferably 110°C, more preferably 115°C, and even more preferably 120°C as the lower limit, and is preferably 140°C as the upper limit, but is not limited thereto.

In the present specification, the "glass transition temperature (Tg)" is measured according to JIS K7121. Specifically, a DSC curve is measured under the conditions in which the temperature is once raised to 230°C, then reduced to room temperature, and then raised from room temperature to 230°C at 10°C/min. The midpoint obtained from the DSC curve measured at the time of the second temperature rise is determined as the "glass transition temperature (Tg)."

The method for producing the methacrylic copolymer (B) according to the present invention includes:

a step of continuously supplying, to a tank reactor, a reaction raw material containing a monomer mixture of 50 to 93 mass% of methyl methacrylate, 40 to 7 mass% of $\alpha$-methylstyrene, and 0 to 20 mass% of another monomer copolymerizable with them, a radical polymerization initiator, and if necessary, a chain transfer agent;
a step of performing bulk polymerization of the monomer mixture in the tank reactor at a polymerization conversion rate of up to 30 to 60 mass% to obtain a reaction product; and
a step of removing the monomer mixture in the reaction product to obtain a polymer,

in which each step can be performed by a known technique.

Vinylidene Fluoride-Based Resin Composition

In the vinylidene fluoride-based resin composition of the present invention, the mass ratio of the vinylidene fluoride-based resin (A) to the methacrylic copolymer (B) is 95/5 to 40/60, preferably 90/10 to 45/55, and more preferably 80/20 to 50/50, in terms of heat resistance, chemical resistance, and wear resistance.

In the vinylidene fluoride-based resin composition of the present invention, the proportion of $\alpha$-type crystals is preferably 40% or more, more preferably 50% or more, and even more preferably 60% or more. The vinylidene fluoride-based resin composition of the present invention has excellent heat resistance because the proportion of $\alpha$-type crystals is 40% or more.

PVDF is known to have three types of crystal structures: $\alpha$-type (also referred to as "Type II"), $\beta$-type (also referred to as "Type I"), and $\gamma$-type (also referred to as "Type III"). Resin compositions containing a vinylidene fluoride-based resin and a methacrylic resin have been known to mainly have a $\beta$-type crystal structure; however, the vinylidene fluoride-based resin composition of the present invention is characterized in that the proportion of an $\alpha$-type crystal structure is 40% or more.

The $\alpha$-type crystal ratio (hereinafter referred to as "a-crystal ratio") of the vinylidene fluoride-based resin composition can be confirmed by the infrared absorption spectrum measured by the transmission method using an infrared spectrophotometer. Specifically, the absorption intensity at a wave number of 765 cm$^{-1}$, which is the characteristic absorption of $\alpha$-type crystals, and the absorption intensity at a wave number of 840 cm$^{-1}$, which is the characteristic absorption of $\beta$-type crystals, are determined from the obtained spectrum, and the $\alpha$-type crystal ratio is calculated according to the following formula:

$$\alpha\text{-crystal ratio \%} = \{\text{absorption intensity at 765 cm}^{-1}/(\text{absorption intensity at 765 cm}^{-1} + \text{absorption intensity at 840 cm}^{-1})\} \times 100$$

In the vinylidene fluoride-based resin composition of the present invention, the crystal melting enthalpy measured by a differential scanning calorimeter is preferably in the range of 15 to 40 J/g, more preferably in the range of 17 to 35 J/g, and even more preferably in the range of 20 to 30 J/g. The crystal melting enthalpy depends on the content of the vinylidene fluoride-based resin (A) in the vinylidene fluoride-based resin composition. Therefore, the value decreases if the content of the methacrylic copolymer (B) is increased in order to improve transparency. In terms of achieving both crystal content and transparency, the value is preferably 15 to 40 J/g. In the present invention, the crystal melting enthalpy refers to crystal melting enthalpy measured according to JIS K7121.

The vinylidene fluoride-based resin composition of the present invention may contain a filler, if necessary, as long as the effect of the present invention is not impaired. Examples of fillers include calcium carbonate, talc, carbon black, titanium oxide, silica, clay, barium sulfate, magnesium carbonate, and the like. The amount of filler that can be contained in the resin composition of the present invention is preferably 3 mass% or less, and more preferably 1.5 mass% or less.

The vinylidene fluoride-based resin composition of the present invention may contain one or more other polymers as long as the effect of the present invention is not impaired. Examples of such other polymers include polyolefin resins, such as polyethylene, polypropylene, polybutene-1, poly-4-methylpentene-1, and polynorbornene; ethylene ionomers; styrene resins, such as polystyrene, styrene-maleic anhydride copolymers, high-impact polystyrene, AS resin, ABS resin, AES resin, AAS resin, ACS resin, and MBS resin; methyl methacrylate-styrene copolymers; polyester resins, such as polyethylene terephthalate and polybutylene terephthalate; polyamides, such as nylon 6, nylon 66, and polyamide elastomers; polyvinyl chloride, polyvinylidene chloride, polyvinyl alcohol, ethylene-vinyl alcohol copolymers, polyacetal, polyurethane, phenoxy resins, modified polyphenylene ether, polyphenylene sulfide, silicone-modified resins; silicone rubber; acrylic multilayer copolymer elastomers; acrylic thermoplastic elastomers, such as diblock copolymers and triblock copolymers of methyl methacrylate polymer block-n-butyl acrylate polymer block; styrene thermoplastic elastomers, such as SEPS, SEBS, and SIS; olefin rubber, such as IR, EPR, and EPDM; and the like. The amount of other polymers that can be contained in the resin composition of the present invention is preferably 10 mass% or less, more preferably 5 mass% or less, and most preferably 0 mass%.

The vinylidene fluoride-based resin composition of the present invention may contain additives, such as antioxidants, thermal degradation inhibitors, ultraviolet absorbers, light stabilizers, lubricants, release agents, polymer processing aids, antistatic agents, flame retardants, dye pigments, light diffusers, organic dyes, delusterants, and phosphors, as long as the effect of the present invention is not impaired.

Antioxidants in themselves are effective for preventing the oxidation degradation of resins in the presence of oxygen. Examples of antioxidants include phosphorus-based antioxidants, hindered phenolic antioxidants, thioether-based antioxidants, and the like. These antioxidants can be used singly or in a combination of two or more. Among these, phosphorus-based antioxidants and hindered phenolic antioxidants are preferred, and the combined use of a phosphorus-based antioxidant and a hindered phenolic antioxidant is more preferred, in terms of an effect of preventing degradation of optical characteristics due to staining.

When a phosphorus-based antioxidant and a hindered phenolic antioxidant are used in combination, the proportion thereof is not particularly limited; however, the molar ratio of the phosphorus-based antioxidant/hindered phenolic antioxidant is preferably 1/5 to 2/1, and more preferably 1/2 to 1/1.

Preferred examples of phosphorus-based antioxidants include 2,2-methylenebis(4,6-di-t-butylphenyl)octyl phosphite (trade name: ADK STAB HP-10, produced by Adeka Corporation), tris(2,4-di-t-butylphenyl)phosphite (trade name: IRUGAFOS 168, produced by Ciba Specialty Chemicals), 3,9-bis(2,6-di-tert-butyl-4-methylphenoxy)-2,4,8,10-tetraoxa-3,9-diphosphaspiro[5.5]undecane (trade name: ADK STAB PEP-36, produced by Adeka Corporation), and the like.

Examples of hindered phenolic antioxidants include pentaerythrityl-tetrakis[3-(3,5-di-t-butyl-4-hydroxyphenyl)propionate] (trade name: IRGANOX 1010, produced by Ciba Specialty Chemicals), octadecyl-3-(3,5-di-t-butyl-4-hydroxyphenyl)propionate (trade name: IRGANOX 1076, produced by Ciba Specialty Chemicals), and the like.

Thermal degradation inhibitors are compounds that can prevent thermal degradation of a resin by scavenging polymer radicals generated upon exposure to a high temperature under substantially oxygen-free conditions. Examples include 2-t-butyl-6-(3'-t-butyl-5'-methyl-hydroxybenzyl)-4-methylphenylacrylate (trade name: Sumilizer GM, produced by Sumitomo Chemical Co., Ltd.), 2,4-di-t-amyl-6-(3',5'-di-t-amyl-2'-hydroxy-α-methylbenzyl)phenylacrylate (trade name: Sumilizer GS, produced by Sumitomo Chemical Co., Ltd.), and the like.

Ultraviolet absorbers are compounds having the ability to absorb ultraviolet rays. Ultraviolet absorbers are compounds considered to have the function of mainly converting light energy to heat energy.

Examples of ultraviolet absorbers include benzophenones, benzotriazoles, triazines, benzoates, salicylates, cyano acrylates, oxalic anilides, malonic acid esters, formamidines, and the like. These may be used singly or in a combination of two or more. Preferred among these are benzotriazoles, triazines, or ultraviolet absorbers having a molar extinction coefficient $\varepsilon_{max}$ at a wavelength of 380 to 450 nm of 1200 $dm^3 \cdot mol^{-1} cm^{-1}$ or less.

Light stabilizers are compounds considered to have the function of mainly scavenging radicals generated by oxidation due to light. Examples include hindered amines, such as compounds having a 2,2,6,6-tetraalkylpiperidine skeleton.

Examples of lubricants include stearic acid, behenic acid, stearamide acid, methylene bissstearamide, hydroxy-stearic acid triglyceride, paraffin wax, ketone wax, octyl alcohol, hydrogenated oil, and the like.

Release agents are compounds having the function of facilitating the release of molded articles from molds. Examples include higher alcohols, such as cetyl alcohol and stearyl alcohol; glycerin higher fatty acid esters, such as stearic acid monoglyceride and stearic acid diglyceride; and the like. Since the use of glycerin higher fatty acid esters may cause gel-like foreign matter, it is preferable to use higher alcohols.

Polymer processing aids are compounds that are effective in achieving thickness accuracy and thinness of the obtained film when a vinylidene fluoride-based resin composition is molded. Such a polymer processing aid can generally be produced by emulsion polymerization. The polymer processing aid is preferably polymer particles having a particle size of 0.05 to 0.5 um.

The polymer particles may be monolayer particles composed of a polymer having a single composition ratio and a single intrinsic viscosity, or multilayer particles composed of two or more types of polymers having different composition ratios or intrinsic viscosities. Preferred among these are particles with a two-layer structure having a polymer layer with a low intrinsic viscosity as the inner layer and a polymer layer with a high intrinsic viscosity of 5 dl/g or more as the outer layer. The polymer processing aid preferably has an intrinsic viscosity of 3 to 6 dl/g. In terms of enhancing the effect of improving moldability and improving the melt fluidity of the acrylic resin composition, it is preferable that the intrinsic viscosity is within the above range.

Examples of antistatic agents include alkyl sulfonates, such as sodium heptyl sulfonate, sodium octyl sulfonate, sodium nonyl sulfonate, sodium decyl sulfonate, sodium dodecyl sulfonate, sodium cetyl sulfonate, sodium octadecyl sulfonate, sodium diheptyl sulfonate, potassium heptyl sulfonate, potassium octyl sulfonate, potassium nonyl sulfonate, potassium decyl sulfonate, potassium dodecyl sulfonate, potassium cetyl sulfonate, potassium octadecyl sulfonate, potassium diheptyl sulfonate, lithium heptyl sulfonate, lithium octyl sulfonate, lithium nonyl sulfonate, lithium decyl sulfonate, lithium dodecyl sulfonate, lithium cetyl sulfonate, lithium octadecyl sulfonate, and lithium diheptyl sulfonate; and the like.

Examples of flame retardants include metal hydrates having hydroxyl groups or crystalline water, such as magnesium hydroxide, aluminum hydroxide, aluminum hydrated silicate, magnesium hydrated silicate, and hydrotalcite; phosphoric acid compounds, such as polyphosphoric amine and phosphoric acid esters; silicon compounds; and the like. Phosphoric acid ester flame retardants, such as trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixilenyl phosphate, dimethyl ethyl phosphate, methyl dibutyl phosphate, ethyl dipropyl phosphate, and hydroxyphenyl diphenyl phosphate are preferred.

Examples of dyes and pigments include red organic pigments, such as Para Red, Fire Red, pyrazolone red, thioindico red, and perylene red; blue organic pigments, such as cyanine blue and indanthrene blue; and green organic pigments, such as cyanine green and naphthol green. These pigments can be used singly or in a combination with two or more.

Preferably usable organic dyes are compounds having the function of converting ultraviolet rays into visible light.

Examples of light diffusers and delusterants include glass microparticles, polysiloxane-based crosslinked microparticles, crosslinked-polymer microparticles, talc, calcium carbonate, barium sulfate, and the like.

Examples of phosphors include fluorescent pigments, fluorescent dyes, fluorescent white dyes, fluorescent whitening agents, fluorescent bleaching agents, and the like.

These additives may be used singly or in a combination of two or more. Further, these additives may be added to the polymerization reaction liquid during production of the vinylidene fluoride-based resin (A) and methacrylic copolymer (B), may be added to the produced vinylidene fluoride-based resin (A) and methacrylic copolymer (B), or may be added during preparation of the vinylidene fluoride-based resin composition of the present invention. The total amount of additives contained in the vinylidene fluoride-based resin composition of the present invention is preferably 7 mass% or less, more preferably 5 mass% or less, and even more preferably 4 mass% or less, based on the vinylidene fluoride-based resin composition, in terms of suppressing appearance defects of the molded article.

The method for preparing the vinylidene fluoride-based resin composition of the present invention is not particularly limited. For example, a monomer mixture containing methyl methacrylate etc. is polymerized in the presence of the vinylidene fluoride-based resin (A) to produce the methacrylic copolymer (B), or the vinylidene fluoride-based resin (A) and the methacrylic copolymer (B) are melt-kneaded. Other polymers and additives may be mixed, as necessary, during melt-kneading; the vinylidene fluoride-based resin (A) may be mixed with other polymers and additives, and then mixed with the methacrylic copolymer (B); the methacrylic copolymer (B) may be mixed with other polymers and additives, and then mixed with the vinylidene fluoride-based resin (A); or other methods may be used. Kneading can be performed by using a known mixing or kneading device, such as a kneader-ruder, an extruder, a mixing roll, or a Banbury mixer. Preferred among these is a twin-screw extruder.

The vinylidene fluoride-based resin composition of the present invention can be made into pellets or other forms for convenience during storage, transportation, or molding.

Molded Article

The molded article of the present invention contains the vinylidene fluoride-based resin composition of the present invention. The method for producing the molded article of the present invention is not particularly limited. Examples include melt-molding methods, such as T-die methods (lamination method, co-extrusion method, etc.), inflation methods (co-extrusion method etc.), compression molding methods, blow molding methods, calendar molding methods, vacuum molding methods, and injection molding methods (insert method, two-color method, press method, core-back method, sandwich method, etc.); solution casting methods; and the like. Among these, T-die methods, inflation methods, or injection molding methods are preferred in terms of high productivity, cost, etc. Although the type of molded article is not limited, preferred examples include films (plate-like molded articles with a thickness of 5 um or more and 250 um or less) and sheets (plate-like molded articles with a thickness larger than 250 um). Among these, films are particularly preferred in terms of excellent transparency.

In general, thinner films tend to have higher transparency. Therefore, the thickness of the film of the present invention is preferably 350 um or less, more preferably 250 um or less, and even more preferably 100 um or less.

If the film has a rough surface, external haze occurs due to light scattering on the film surface, which reduces transparency. Therefore, the arithmetic mean roughness (Ra) of the film is preferably 50 nm or less, and more preferably 40 nm or less.

A laminate can be obtained by laminating a layer containing the vinylidene fluoride-based resin composition of the present invention and another material (e.g., a layer containing another thermoplastic copolymer). Examples of the other material used in the laminate include steel materials, plastics (e.g., other thermoplastic resins), wood, glass, and the like. The laminate obtained by the present invention can be preferably used for wallpaper; automotive interior material surfaces; automotive exterior material surfaces, such as bumpers; mobile phone surfaces; furniture surfaces; personal computer surfaces; vending machine surfaces; bathroom member surfaces, such as bathtubs; and the like.

Examples of other thermoplastic resins used in the layer containing another thermoplastic copolymer include methacrylic resins; polycarbonate; olefin resins, such as polyethylene, polypropylene, polybutene-1, poly-4-methylpentene-1, and polynorbornene; ethylene ionomers; styrene resins, such as polystyrene, styrene-maleic anhydride copolymers, high-impact polystyrene, AS resin, ABS resin, AES resin, AAS resin, ACS resin, and MBS resin; methyl methacrylate-styrene copolymers; ester resins, such as polyethylene terephthalate and polybutylene terephthalate; amide resins, such as nylon 6, nylon 66, and polyamide elastomers; polyphenylene sulfide, polyether ether ketone, polysulfone, polyphenylene oxide, polyimide, polyetherimide, polyvinyl chloride, polyvinylidene chloride, polyvinylidene fluoride, polyvinyl alcohol, ethylene-vinyl alcohol copolymers, polyacetal, and phenoxy resins. Preferred are methacrylic resins and polycarbonate.

A laminate comprising a layer containing the vinylidene fluoride-based resin composition of the present invention and a layer containing a methacrylic resin, which is an embodiment of the laminate described above, has high chemical resistance and heat resistance, is suitable for decorative applications, and is suitably used for automotive interior and exterior materials and the like. As other applications, the laminate can be used for decorative metal sheets, vehicle glazing, machine tool covers, security sheets, and shatterproof sheets.

When the laminate comprising a layer containing the vinylidene fluoride-based resin composition of the present invention and a layer containing a methacrylic resin, which is an embodiment of the laminate described above, is used for automotive interior and exterior materials, the layer containing the vinylidene fluoride-based resin composition of the present invention may be laminated on only one side of the layer containing a methacrylic resin or on both sides thereof. The thickness of the layer containing the vinylidene fluoride-based resin composition is preferably in the range of 2 to 15%, more preferably in the range of 3 to 12%, and even more preferably in the range of 4 to 10%, relative to the thickness of the laminate.

Examples

Next, the present invention will be more specifically described with reference to Examples. Note that the present invention is not limited by the Examples.

Physical properties and the like were measured by the following methods.

Weight Average Molecular Weight

The weight average molecular weight (Mw) of the resin obtained in each of the Production Examples was determined by a gel permeation chromatography method (GPC method). A sample solution was prepared by dissolving 4 mg of a resin to be measured in 5 ml of tetrahydrofuran. The temperature of a column oven was set to 40°C, 20 $\mu$l of the sample solution was injected into an apparatus at an eluent flow rate of 0.35 ml/min, and a chromatogram was measured. 10 standard polystyrenes having a molecular weight within a range of 400 to 5,000,000 were subjected to GPC measurement, and a calibration curve showing a relationship between the holding time and the molecular weight was created. Based on the calibration curve, Mw of the resin to be measured was determined. A value corresponding to the molecular weight of the standard polystyrene obtained from the chromatogram measured by gel permeation chromatography (GPC) was defined as the molecular weight of the copolymer.

Apparatus: HLC-8320 GPC apparatus, produced by Tosoh Corporation
Separation column: serially connected TSK guard column Super HZ-H, TSKgel HZM-M, and TSKgel Super HZ4000 produced by Tosoh Corporation
Eluent: tetrahydrofuran
Eluent flow rate: 0.35 ml/min
Column temperature: 40°C
Detection method: differential refractive index (RI)

Each Unit Composition in Copolymer

The carbon ratio of a phenyl group of an $\alpha$-methylstyrene unit, a methoxy group of a methyl methacrylate unit, a phenyl group of a styrene unit, and a carbonyl group of a maleic anhydride unit was determined by $^{13}$C-NMR, and each unit composition was calculated according to the carbon ratio.

Glass Transition Temperature; Tg

The resin composition obtained in each of the Production Examples was once heated to 250°C, then cooled to room temperature, and then heated from room temperature to 200°C at 10°C/min. A DSC curve was measured under these conditions using a differential scanning calorimeter (DSC-50 (product number), produced by Shimadzu Corporation) according to JIS K7121. The glass transition temperature at the midpoint obtained from the DSC curve measured at the time of the second temperature rise was defined as the glass transition temperature in the present invention.

Crystal Melting Enthalpy ($\Delta$H) and Melting Point

The resin compositions obtained in the Examples and Comparative Examples were subjected to measurement according to JIS K7121 using a differential scanning calorimeter (Q-20 (product number), produced by TA Instruments). A DSC curve was measured under the conditions in which the temperature was once raised to 200°C, then reduced from 200°C to -50°C at 5°C/min, and then raised from -50°C to 200°C at 10°C/min. The crystal melting enthalpy ($\Delta$H) was calculated from the area of the crystal melting peak observed at the time of the second temperature rise. The peak top value of the crystal melting peak was used as the melting point.

$\alpha$-Crystal Ratio

The resin compositions obtained in the Examples and Comparative Examples were each placed in a mold frame, pressed at 230°C and 50 kg/cm$^2$, and cooled with water at 50 kg/cm$^2$, thereby producing test pieces having a thickness of 200 um. The infrared absorption of each test piece was measured by the transmission method using an FT-IR spectrometer (Nicolet iZ10 (product number), produced by Thermo Fisher Scientific). The absorption intensity at a wave number of 765 cm$^{-1}$, which is the characteristic absorption of $\alpha$-type crystals, and the absorption intensity at a wave number of 840 cm$^{-1}$, which is the characteristic absorption of $\beta$-type crystals, were determined from the obtained infrared absorption spectrum diagram, and the proportion of $\alpha$-type crystals ($\alpha$-crystal ratio) was calculated by the

following formula:

$$\alpha\text{-crystal ratio (\%)} = \{\text{absorption intensity at 765 cm}^{-1}/(\text{absorption intensity at 765 cm}^{-1} + \text{absorption intensity at 840 cm}^{-1})\} \times 100$$

Heat Resistance; Vicat Softening Point Temperature (VST)

The resin compositions obtained in the Examples and Comparative Examples were each placed in a mold frame, pressed at 230°C and 50 kg/cm$^2$, and cooled with water at 50 kg/cm$^2$, thereby producing test pieces having a thickness of 4 mm. The Vicat softening point temperature (VST) of each test piece was measured according to the method described in JIS K7206 (B50 method) using an HDT tester (3M-2 (product number), produced by Toyo Seiki Seisaku-sho, Ltd.).

Scratch Resistance; Steel Wool Resistance

The resin compositions obtained in the Examples and Comparative Examples were each placed in a mold frame, pressed at 230°C and 50 kg/cm$^2$, and cooled with water at 50 kg/cm$^2$, thereby producing test pieces having a thickness of 200 um. Using a reciprocating wear tester (produced by Toyo Seiki Seisaku-sho, Ltd.), each test piece was rubbed 200 times with steel wool #0000 under a load of 900 g, and the difference in haze values before and after rubbing was evaluated. The haze was measured by using a spectrophotometer (SE5000, produced by Nippon Denshoku Industries Co., Ltd.) according to JIS-K7361.

Chemical Resistance; Dimethyl Carbonate Resistance

The resin compositions obtained in the Examples and Comparative Examples were each placed in a mold frame, pressed at 230°C and 50 kg/cm$^2$, and cooled with water at 50 kg/cm$^2$, thereby producing test pieces having a thickness of 4 mm. Each test piece was immersed in dimethyl carbonate for 168 hours at 23°C and a relative humidity of 50%, and the weight change before and after immersion was measured.

Examples of Various Materials

The materials shown below were used for the vinylidene fluoride-based resin (A) according to the present invention. KF Polymer #1100 (trade name, produced by Kureha Corporation), 100 mass% of vinylidene fluoride unit (homopolymer of vinylidene fluoride), Mw = 280,000, glass transition temperature = -35°C

Methacrylic Copolymer (B)

Production Examples 1 to 4

Purified methyl methacrylate (MMA), $\alpha$-methylstyrene ($\alpha$MSt), maleic anhydride (Mah), styrene (St), 2,2'-azo-bis(2-methylpropionitrile) (AIBN), and n-octyl mercaptan (n-OM) were placed in an autoclave with a stirrer in proportions shown in Table 1, and the mixture was uniformly dissolved, thereby obtaining a polymerization raw material (raw material liquid). Nitrogen gas was blown into the polymerization raw material, and dissolved oxygen was removed to 3 ppm. Then, the inside of a continuous flow tank reactor equipped with a brine cooling condenser was replaced with nitrogen gas. The polymerization raw material was continuously supplied into the tank reactor at a constant flow rate to achieve the average residence time shown in Table 1, and subjected to bulk polymerization at the polymerization temperature shown in Table 1, and a solution containing a methacrylic copolymer was continuously discharged from the tank reactor. The pressure in the tank reactor was adjusted by a pressure regulating valve connected to the brine cooling condenser. The polymerization conversion rate was the value as shown in Table 1. Subsequently, the solution discharged from the reactor was heated to 230°C and supplied to a twin-screw extruder controlled to 240°C. In the twin-screw extruder, volatile matter comprising an unreacted monomer as a main component was separated and removed, and the methacrylic copolymer was extruded as a strand. The strand was cut with a pelletizer, thereby obtaining methacrylic copolymers (B-1) to (B-4). The weight average molecular weight Mw, ratio of each monomer unit, and glass transition temperature of each of the obtained methacrylic copolymers were measured. The results are shown in Table 1.

Production Example 5

An MS resin (a copolymer of methyl methacrylate (MMA) and styrene (St)) was polymerized according to the production method of a copolymer (A) described in the section of [Examples] in JP2003-231785A. A methacrylic copolymer (B-5) (Mw = 95,000, Tg = 115°C, styrene monomer unit content: 20 mass%) was obtained by changing the mass ratio of MMA and St to be placed in an autoclave.

Table 1

| | | | Production Example 1 | Production Example 2 | Production Example 3 | Production Example 4 |
|---|---|---|---|---|---|---|
| Methacrylic copolymer (B) | | | (B-1) | (B-2) | (B-3) | (B-4) |
| Raw material liquid | MMA | wt% | 75 | 82 | 78 | 100 |
| | $\alpha$MSt | wt% | 25 | 15 | 18 | |
| | Maleic anhydride (Mah) | wt% | | 3 | | |
| | St | wt% | | | 5 | |
| | n-OM | phr | 0.02 | 0.02 | 0.1 | 0.29 |
| | AIBN | ppm | 400 | 300 | 400 | 50 |
| | Polymerization temperature | °C | 130 | 130 | 130 | 140 |
| | Average residence time | h | 3.0 | 2.5 | 4.0 | 2.0 |
| | Polymerization conversion rate | % | 32 | 46 | 41 | 55 |
| Polymer composition and physical properties | Content of MMA-derived structural unit | wt% | 88 | 84 | 82 | 100 |
| | Content of $\alpha$MSt-derived structural unit | wt% | 12 | 14 | 13 | |
| | Content of Mah-derived structural unit | wt% | | 2 | 5 | |
| | Content of St-derived structural unit | wt% | | | | |
| | Weight average molecular weight | - | 97000 | 89000 | 82000 | 75000 |
| | Glass transition temperature | °C | 130 | 142 | 128 | 120 |

Example 1

90 parts by mass of the vinylidene fluoride-based resin (A) and 10 parts by mass of the methacrylic copolymer (B-1) were mixed and melt-kneaded by Labo Plastomill (produced by Toyo Seiki Seisaku-sho, Ltd.) at 230°C for 3 minutes, thereby obtaining a vinylidene fluoride-based resin composition. The evaluation results are shown in Table 2.

Examples 2 to 5

Vinylidene fluoride-based resin compositions were obtained in the same manner as in Example 1, except for the formulations shown in Table 2. The evaluation results are shown in Table 2.

Comparative Examples 1 to 6

Vinylidene fluoride-based resin compositions were obtained in the same manner as in Example 1, except for the formulations shown in Table 2. The evaluation results are shown in Table 2.

Table 2

| | Resin composition | | | | | | | Molded article | | |
|---|---|---|---|---|---|---|---|---|---|---|
| | Vinylidene fluoride-based resin (A) | Methacrylic copolymer (B) | Blend (parts by mass) | | Melting point [°C] | $\Delta H$ [J/g] | $\alpha$-crystal ratio [%] | Heat resistance | Scratch resistance | Chemical resistance |
| | | | Vinylidene fluoride-based resin | Methacrylic resin | | | | VST [°C] | $\Delta$ haze [%] | Weight change [%] |
| Example 1 | KF Polymer#1100 | Methacrylic copolymer (B-1) | 90 | 10 | 174 | 40 | 61 | 166 | 10 | +4 |
| Example 2 | KF Polymer #1100 | Methacrylic copolymer (B-1) | 70 | 30 | 174 | 24 | 56 | 159 | 4 | +8 |
| Example 3 | KF Polymer #1100 | Methacrylic copolymer (B-1) | 60 | 40 | 173 | 20 | 51 | 155 | 2 | +10 |
| Example 4 | KF Polymer #1100 | Methacrylic copolymer (B-2) | 70 | 30 | 174 | 24 | 56 | 161 | 4 | +8 |
| Example 5 | KF Polymer #1100 | Methacrylic copolymer (B-3) | 70 | 30 | 173 | 27 | 60 | 160 | 8 | +4 |
| Comparative Example 1 | KF Polymer #1100 | Methacrylic copolymer (B-1) | 50 | 50 | 172 | 16 | 46 | 69 | 5 | -21 |
| Comparative Example 2 | KF Polymer #1100 | Methacrylic copolymer (B-3) | 50 | 50 | 173 | 20 | 64 | 108 | 2 | -37 |
| Comparative Example 3 | KF Polymer #1100 | Methacrylic copolymer (B-4) | 70 | 30 | 172 | 21 | 20 | 152 | 19 | +8 |
| Comparative Example 4 | KF Polymer #1100 | Methacrylic copolymer (B-4) | 50 | 50 | 165 | 6 | 46 | 60 | 17 | -46 |
| Comparative Example 5 | KF Polymer #1100 | Methacrylic copolymer (B-5) | 50 | 50 | 164 | 3 | 64 | 100 | 2 | -30 |
| Comparative Example 6 | KF Polymer #1100 | - | 100 | - | 174 | 47 | 64 | 170 | 13 | +2 |

As shown in Table 2, the vinylidene fluoride-based resin compositions of the present invention have high crystallinity, with a high proportion of $\alpha$ crystals in the crystals, even though they contain a methacrylic copolymer. Therefore, these compositions have an excellent balance of heat resistance, scratch resistance, and chemical resistance. Due to these features, the vinylidene fluoride-based resin compositions of the present invention can provide molded articles and laminates having excellent heat resistance, scratch resistance, and chemical resistance.

Industrial Applicability

The molded articles and laminates of the present invention have excellent heat resistance, scratch resistance, and chemical resistance, and are suitable for use in covers and housings of display devices, window materials and covers for automotive interiors and exteriors, and the like.

**Claims**

1. A vinylidene fluoride-based resin composition that is a resin composition comprising 60 to 95 mass% of a vinylidene fluoride-based resin (A) and 5 to 40 mass% of a methacrylic copolymer (B),
   the methacrylic copolymer (B) comprising 50 to 93 mass% of a methyl methacrylate unit, 7 to 30 mass% of an $\alpha$-methylstyrene unit, and 0 to 20 mass% of another monomer unit copolymerizable with these units.

2. The vinylidene fluoride-based resin composition according to claim 1, wherein the other copolymerizable monomer unit is formed from at least one member selected from the group consisting of an unsaturated dicarboxylic anhydride monomer, an acrylic acid ester monomer, an aromatic vinyl monomer, and a vinyl cyanide monomer.

3. The vinylidene fluoride-based resin composition according to claim 1, wherein the other copolymerizable monomer unit is formed from at least one member selected from the group consisting of maleic anhydride, methyl acrylate, ethyl acrylate, styrene, and acrylonitrile.

4. The vinylidene fluoride-based resin composition according to claim 1, wherein the vinylidene fluoride-based resin (A) is a homopolymer of vinylidene fluoride.

5. The vinylidene fluoride-based resin composition according to claim 1, wherein a crystal structure determined from infrared absorption spectrum absorbance has a proportion of $\alpha$-type crystals of 40% or more when the sum of $\alpha$-type crystals and $\beta$-type crystals is taken as 100%.

6. The vinylidene fluoride-based resin composition according to claim 1, which has a crystal melting enthalpy of 15 J/g or more and 40 J/g or less as measured by a differential scanning calorimeter.

7. A molded article molded from the vinylidene fluoride-based resin composition according to claim 1.

8. The molded article according to claim 7, which is a film having a thickness of 350 um or less.

9. A laminate having a layer comprising the vinylidene fluoride-based resin composition according to claim 1 and a layer comprising another thermoplastic resin.

## INTERNATIONAL SEARCH REPORT

| International application No. |
|---|
| **PCT/JP2022/021760** |

### A. CLASSIFICATION OF SUBJECT MATTER

*C08L 27/16*(2006.01)i; *C08F 212/06*(2006.01)i; *C08F 220/14*(2006.01)i; *C08F 222/06*(2006.01)i; *C08J 5/18*(2006.01)i; *C08L 25/04*(2006.01)i; *C08L 33/12*(2006.01)i
FI: C08L27/16; C08F222/06; C08L33/12; C08L25/04; C08F220/14; C08F212/06; C08J5/18 CEY

According to International Patent Classification (IPC) or to both national classification and IPC

### B. FIELDS SEARCHED

Minimum documentation searched (classification system followed by classification symbols)

C08L27/16; C08F212/06; C08F220/14; C08F222/06; C08J5/18; C08L25/04; C08L33/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | JP 2017-71751 A (MITSUBISHI RAYON CO) 13 April 2017 (2017-04-13) | 1-9 |
| A | WO 2016/199829 A1 (SUMITOMO CHEMICAL CO) 15 December 2016 (2016-12-15) | 1-9 |
| A | JP 2021-4324 A (KURARAY CO) 14 January 2021 (2021-01-14) | 1-9 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 July 2022** | **26 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/021760**

| Patent document cited in search report | | | Publication date (day/month/year) | Patent family member(s) | Publication date (day/month/year) |
|---|---|---|---|---|---|
| JP | 2017-71751 | A | 13 April 2017 | (Family: none) | |
| WO | 2016/199829 | A1 | 15 December 2016 | (Family: none) | |
| JP | 2021-4324 | A | 14 January 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021093731 A
- JP S4312012 A
- JP 2002019051 A
- WO 2016199829 A1
- JP 2003231785 A